# EUROPÄISCHE PATENTSCHRIFT

(11) **EP 2 288 526 B1**
(45) Veröffentlichungstag und Bekanntmachung des Hinweises auf die Patenterteilung: **15.08.2018**
(21) Anmeldenummer: 09761544.7
(22) Anmeldetag: 21.04.2009
(51) Int. Cl.: B60T 8/48

(54) **BREMSEINRICHTUNG FÜR EIN KRAFTFAHRZEUG MIT EINEM DRUCKSPEICHER**
AUTOMOTIVE BRAKING DEVICE COMPRISING A PRESSURE ACCUMULATOR
DISPOSITIF DE FREINAGE À ACCUMULATEUR DE PRESSION POUR VÉHICULE À MOTEUR

(30) Priorität: 11.06.2008 DE 102008002348
(43) Veröffentlichungstag der Anmeldung: 02.03.2011
(73) Patentinhaber: Robert Bosch GmbH, 70442 Stuttgart (DE)
(72) Erfinder: WUERTH, Gebhard, 74429 Sulzbach-Laufen (DE); MEHL, Volker, 76356 Weingarten (DE); KUNZ, Michael, 71711 Steinheim An Der Murr (DE); LEIBLEIN, Matthias, 70839 Gerlingen (DE); QUIRANT, Werner, 71717 Beilstein (DE)
(86) Internationale Anmeldenummer: PCT/EP2009/054700
(87) Internationale Veröffentlichungsnummer: WO 2009/149981

(56) Entgegenhaltungen:
- DE-A1- 4 434 960
- DE-A1- 4 445 360
- DE-A1- 19 537 926
- DE-A1- 19 842 872
- DE-B3- 10 319 194
- DE-C1- 4 232 311

## Beschreibung

Die Erfindung liegt auf dem Gebiet der mehrkreisigen Bremsanlagen für Kraftfahrzeuge.

Derartige mehrkreisige Bremsanlagen, insbesondere hydraulischer Bauart haben sich im Kraftfahrzeugbau aus Gründen der Effizienz und Funktionssicherheit durch Redundanz durchgesetzt. Typischerweise wird durch Betätigen eines Bremspedals in einem Hauptbremszylinder eine Hydraulikflüssigkeit komprimiert und zu den hydraulischen Bremskreisen hin verschoben.

Abgewandelte Konstellationen können sich beispielsweise dadurch ergeben, dass zusätzliche Verzögerungsmittel wie beispielsweise zugeschaltete Generatoren in Form der Lichtmaschine des Fahrzeugs oder eines generatorisch betriebenen Antriebselektromotors bei Hybridfahrzeugen in die Bremsanlage integriert werden. Hierdurch wird beispielsweise das rekuperative Bremsen möglich, das einerseits die Bremsen schont, andererseits Energie aus der kinematischen Energie des Fahrzeugs beim Bremsen zurückgewinnt. Dabei sind jedoch umfangreiche Probleme bei der Kombination der Verzögerungswirkungen durch entsprechende Wirkaggregate einerseits und die Radbremsen andererseits zu lösen. Insbesondere kann die Verzögerungswirkung von generatorischen Wirkaggregaten variabel sein, so dass der Fahrer entsprechende Änderungen der Verzögerungsbeschleunigung durch stärkere oder schwächere Betätigung des Bremspedals ausgleichen muss.

Steuereinrichtungen zur Steuerung beziehungsweise Regelung von Elementen einer Bremsanlage sind grundsätzlich in vielfältiger Art bekannt. Sie werden beispielsweise bei ABS-Systemen, bei Antischlupfregelungen, bei dynamischer elektronischer Stabilisierung eines Fahrzeugs in der Kurvenfahrt eingesetzt oder auch zur Unterstützung einer ungebremsten Kurvenfahrt durch automatisches Anbremsen eines kurveninneren Rades.

### STAND DER TECHNIK

Aus der DE 02006020890 ist eine Bremseinrichtung mit einem besonders kompakten Aufbau eines Hydraulikblocks bekannt.

Aus der DE 102006020520 ist ein Bremssystem mit einem bremsbegrenzenden, entsprechend gesteuerten Ventil bekannt.

Aus der DE 4128087 A1 ist ein Bremsdruckregelsystem für ein Fahrzeug bekannt, mit dem bei Kurvenbremsungen eine unterbremste Hinterachse verhindert wird. Der Bremsdruck an der Vorderachse wird dabei durch den Fahrer vorgegeben, der Bremsdruck an der Hinterachse in Abhängigkeit hiervon geregelt.

Es ist grundsätzlich auch bekannt, die Bremskraft derart zu verteilen, dass eine möglichst starke Abbremsung des Fahrzeugs unter Berücksichtigung der Kraftschlussausnutzung erreicht wird, wobei statisch und/oder dynamisch stärker belastele Räder auch entsprechend stärker bremsbelastet werden können.

Aus der EP 0173954 B1 ist ein System bekannt, bei dem die Bremsdrücke für einzelne Bremsen mittels einer Bezugsmasse für das Fahrzeug und der durch den Fahrer vorgegebenen Sollverzögerung in einem abgespeicherten fahrzeugspezifischen Kennlinienfeld ermittelt werden. Die ermittelten Bremsdrücke werden in die Bremsen eingesteuert und bedarfsweise bei Abweichung der Fahrzeugverzögerung vom Sollwert nachgersgelt bis die Sollverzögerung erreicht ist.

Aus der DE 3313078 A1 ist eine Bremsdruckregeleinrichtung bekannt, die die Abnutzung verschiedener Radbremsen ermittelt und berücksichtigt, so dass ein gleichmäßiger Verschleiß der einzelnen Radbremsen auf Dauer erzielt wird.

Aus der DE 102005046606 ist eine Bremsanlage bekannt, bei der je ein Bremskreis einer der Achsen eines Fahrzeugs zugeordnet ist, so dass eine Antischlupfeinrichtung sowie eine Fahrdynamikregeleinrichtung ausschließlich in einem Bremskreis vorgesehen sein kann, wodurch der konstruktive Gesamtaufwand minimiert wird.

Aus der DE 19842872 A1 ist ein Verfahren zur Bremsdruckeinstellung in einer mit einer elektrischen Hydraulikpumpe verschenen Fahrzeugbremsanlage bekannt. Dieses Verfahren umfasst die Schritte: Ermitteln eines herrschenden Bremsdruckes oder Bestimmen eines Solldruckes sowie graduelles Ansteuern der Pumpe nach Maßgabe des ermittelten Bremsdruckes oder des Solldruckes.

Die DE 4434960 A1 offenbart eine hydraulische Bremsanlage, die zur Bremsschlupfregelung, zur Antriebsschlupfregelung und zu weiterer Fahrstabilitätsregelung eingesetzt wird. Bei dieser Bremsanlage wird der Förderdruck der Pumpe elektronisch geregelt, wobei als Eingriffsmöglichkeiten dabei beispielsweise die Regelung bzw. Reduzierung des Motorstroms der Pumpe, eine elektromagnetische Schließung des Saugventils der Pumpe oder aber ein kurzzeitiges Umschalten des Trennventils in einer Bremsleitung vorgesehen ist.

Schließlich ist aus der DE 10316090 A1 ein Bremssystem bekannt, mit mehreren Bremskreisen, die grundsätzlich hydraulisch wirken und auf Reibungsbremsen einzelner Räder einwirken, sowie mit einem Generator beziehungsweise einem Antriebselektromotor, der generatorisch betreibbar ist und zum Verzögern zusätzlich genutzt werden kann. Eine Steuereinrichtung ist vorgesehen, um die Bremskraftverteilung auf alle einzelnen Räder unter Berücksichtigung verschiedener fahrdynamischer Größen zu optimieren.

### VORTEILE DER ERFINDUNG

Vor dem Hintergrund des Standes der Technik liegt der Erfindung die Aufgabe zugrunde, eine Bremseinrichtung für ein Kraftfahrzeug zu schaffen, die auch komplexe brems- und fahrdynamische Regelvorgänge unterstützt, eine möglichst hohe Zuverlässigkeit aufweist und dabei konstruktiv möglichst einfach aufgebaut ist.

Die Aufgabe wird gemäß der Erfindung von der Bremseinrichtung für ein Kraftfahrzeug mit den Merkmalen des Patentanspruchs 1 und dem Verfahren zum Betreiben einer Bremseinrichtung für ein Kraftfahrzeug mit den Merkmalen des Patentanspruchs 11 gelöst.

Mittels der Erfindung kann bei den Bremskreisen der ersten Gruppe (dies wird bei üblichen Kraftfahrzeugen meistens lediglich ein einziger erster Bremskreis sein) ein herkömmlicher hydraulischer Bremskreis realisiert sein mit der bekannten Einfachheit im Aufbau und der entsprechenden Zuverlässigkeit und Verfügbarkeit. Zudem hat der Fahrer bei Betätigung der Bremsen des ersten Bremskreises ein unmittelbares Betätigungsgefühl durch die Kopplung des Bremspedals über den Hauptbremszylinder an den oder die ersten Bremskreise.

Zusätzlich ist jedoch wenigstens ein zweiter Bremskreis einer zweiten Gruppe vorgesehen, der zumindest bei Teilbremsvorgängen nicht unmittelbar an das Bremspedal beziehungsweise den Hauptbremszylinder angekoppelt ist, sondern typischerweise als brake-by-wire-Bremse mit elektronischer Abnahme am Bremspedal funktioniert. Durch diesen Aufbau ist es besonders einfach, mit der Bremswirkung eines zweiten Bremskreises die Verzögerungswirkung zusätzlicher Wirkaggregate, die auf die entsprechenden Räder wirken, zu verblenden, das heißt additiv so zu kombinieren, dass insgesamt eine möglichst gleich bleibende und der Bremsabsicht des Fahrers entsprechende Verzögerungswirkung in der Summe entsteht.

Bei einem Totalausfall der Verblendungssteuerung fallen die zweiten Bremskreise in einen üblichen hydraulischen Funktionsmodus zurück, so dass die Vollbremsfähigkeit erhalten bleibt.

Um die zweiten Bremskreise hinlänglich von der Bremsbetätigungseinrichtung in Form des Gaspedals beziehungsweise dem Hauptbremszylinder abkoppeln zu können, ist dabei gemäß der Erfindung zur Druckversorgung dieser Bremskreise ein Druckspeicher vorgesehen, der mittels eines Speicherventils mit der Druckseite der zweiten Bremskreise verbindbar ist und dort, gesteuert durch eine Steuereinrichtung den erforderlichen Bremsdruck über Bremsdruckaufbauventile an die Radbremsen leitet.

Das Volumen des Druckspeichers kann dabei vorteilhaft so ausgelegt werden, dass mehrere Bremsvorgänge ohne eine Nachfüllung ausgeführt werden können.

Das Nachladen des Druckspeichers geschieht idealerweise in ungebremstem Zustand durch eine Hydraulikpumpe eines zweiten Bremskreises.

Das Speicherventil kann entweder als Speicherregelventil auf die Einregelung eines bestimmten Druckunterschiedes oder auf die Erzielung eines bestimmten Absolutdrucks eingerichtet sein, wobei in der letztgenannten Variante Drucksensoren auf der Druckseite der zweiten Bremskreise notwendig sind.

Die Druckspeichereinrichtung weist außer dem Druckspeicher und dem Speicherregelventil vorteilhaft auch einen Sensor zur Ermittlung des Füllgrades des Druckspeichers auf, damit ermittelt werden kann, wann eine Nachfüllung erforderlich ist.

Dabei kann entweder vorgesehen sein, dass der Sensor ein Wegsensor für den Kompressionsweg eines als Faltenbalg oder auch als Kolben/Zylindersystem ausgebildeten Druckspeichers ist oder es kann vorgesehen sein, dass der Sensor ein Drucksensor ist.

Eine vorteilhafte Ausgestaltung der Erfindung sieht ferner vor, dass der Druckspeicher mit je einem Bremsdruckaufbauventil jeder der Radbremsen einer Fahrzeugachse verbunden ist, wobei jede der Radbremsen zusätzlich mit je einem Entbremsungsventil verbunden ist, das seinerseits mit einem Niederdruckspeicher verbunden ist, wobei die Entbremsungsventile regelbare Differenzdruckventile sind.

Insbesondere dadurch, dass die entsprechenden Druckaufbau- und Entbremsungsventile als regelbare Differenzdruckventile ausgebildet sind, kann die Einregelung eines Bremsdrucks an den einzelnen Radbremsen beispielsweise in Form eines modulierten Bremsens bei Wirkung eines ABS- oder Antischlupfsystems mit einem geringen Durchfluss an Hydraulikflüssigkeit und damit einem geringen Kapazitätsverbrauch des Druckspeichers geschehen.

Soll über den Druckspeicher ein bestimmter, durch eine Steuereinrichtung ermittelter Absoluthydraulikdruck bereitgestellt werden, so erweist es sich als sinnvoll, dass ein Drucksensor in wenigstens einem Bremskreis der zweiten Gruppe vorgesehen und mit einer Steuereinrichtung für das Speicherventil verbunden ist.

Um ein besonders effizientes Nachfüllen des Druckspeichers zu erlauben, wobei insbesondere Hydraulikflüssigkeit aus dem Reservoir des Hauptbremszylinders abgesaugt wird, erweist es sich als vorteilhaft, dass das Reservoir der Bremsdruckerzeugungseinrichtung mittels eines schaltbaren Füllventils mit der Ansaugseite einer Hydraulikpumpe eines Bremskreises der zweiten Gruppe verbunden ist. Im ungebremsten Zustand des Fahrzeuges kann das Füllventil gleichzeitig mit dem Speicherventil geöffnet werden, um bei laufender Hydraulikpumpe die Füllung des Druckspeichers zu ermöglichen.

Besonders vorteilhaft lässt sich die erfindungsgemäße Bremseinrichtung im Zusammenhang mit zusätzlichen verzögernden Wirkaggregaten an dem Fahrzeug einsetzen. Hierzu erweist es sich als vorteilhaft, dass die durch die Bremskreise der zweiten Gruppe gebremsten Räder mit einem Wirkaggregat verbunden sind, das eine Verzögerungswirkung ausübt. Alternativ oder zusätzlich können auch die durch die Bremskreise der ersten Gruppe gebremsten Räder mit einem verzögernden Wirkaggregat verbunden sein. Die Bremswirkung der mittels des Druckspeichers angesteuerten Räder, also beispielsweise der Hinterräder oder der Vorderräder des Fahrzeugs lässt sich mit einer entsprechenden Steuereinrichtung optimal mit der Verzögerungswirkung eines Wirkaggregats verblenden, ohne dass dies für den Fahrer oder eventuelle Mitfahrer des Fahrzeugs störend bemerkbar wird.

Dabei kann besonders vorteilhaft vorgesehen sein, dass das Wirkaggregat ein Generator, insbesondere bei einem Hybridfahrzeug ein generatorisch betriebener Antriebselektromotor des Kraftfahrzeugs ist.

Die erfindungsgemäße Bremseinrichtung ist grundsätzlich sowohl bei konventionellen Fahrzeugen, als auch bei Hybridfahrzeugen mit gemischt konventionell/elektrischem Antrieb einsetzbar.

Für den Fall, dass die Bremskreise beider Gruppen als hydraulische Bremskreise ausgebildet sind und je eine Hydraulikpumpe aufweisen, wobei die Hydraulikpumpen mit einem gemeinsamen Pumpenantrieb kinematisch verbunden sind, erweist es sich als vorteilhaft, dass die den Bremskreisen der ersten Gruppe zugeordneten Hydraulikpumpen mechanisch von dem Pumpenantrieb abkoppelbar sind, insbesondere durch eine durch die Drehrichtung der Pumpenantriebswelle steuerbare Freilaufkupplung.

Alternativ kann in dem genannten Fall jedoch auch mit Vorteil vorgesehen sein, dass die den Bremskreisen der ersten Gruppe zugeordneten Hydraulikpumpen über Ventile ansaugseitig mit dem jeweiligen Druckausgang verbindbar sind.

Damit werden die Hydraulikpumpen der jeweils nicht betriebenen Bremskreise mechanisch oder hydraulisch abgekoppelt, so dass eventuell entstehende Pulsationen des Drucks vermieden werden, die durch den Fahrer üblicherweise als störend empfunden würden, wenn er während eines Ladevorganges das Bremspedal betätigen würde

Die Erfindung bezieht sich außer auf eine Bremseinrichtung auch auf ein Verfahren zum Betrieb einer derartigen Bremseinrichtung. Dabei kann vorgesehen sein, dass das Füllventil geöffnet, das Speicherventil geöffnet und die Bremsdruckaufbauventile geschlossen und die Hydraulikpumpe des zweiten Bremskreises zur Füllung des Druckspeichers betrieben wird.

Auf diese Weise ist eine optimierte Füllung des Druckspeichers möglich.

Außerdem kann ein Verfahren zum Betrieb einer Bremseinrichtung vorgesehen sein, bei dem im Falle einer Teilbremsung das Speicherventil wenigstens teilweise geöffnet und damit der Druck in dem/den Bremskreisen der zweiten Gruppe gesteuert oder geregelt wird.

Damit ist die Funktion der zweiten Bremskreise bei dem am häufigsten auftretenden Fall der Teilbremsung definiert. Üblicherweise sind die Bremskreise der zweiten Gruppe bei Teilbremsungen vom Hauptbremszylinder entkoppelt, das entsprechende Trennventil ist geschlossen.

Im Falle eines nicht ausreichend gefüllten Druckspeichers kann für den Fall einer Voll- oder Notbremsung vorgesehen sein, dass das entsprechende Trennventil geöffnet wird und die Bremsbetätigungseinrichtung beziehungsweise ein Hauptbremszylinder direkt mit der Druckseite eines oder mehrerer zweiter Bremskreise gekoppelt wird. Damit verlängert sich zwar der Weg des Bremspedals, jedoch nicht erheblich und der Fahrer erfasst mit seinem Bremsgefühl die gesamte erzielte Bremswirkung aller hydraulischen Bremskreise.

Zu diesem Zweck ist es im Rahmen eines Betriebsverfahrens die Überwachung des Druckspeichers und im Falle einer Vollbremsung bei nicht ausreichend gefülltem Druckspeicher vorgesehen, dass das Trennventil geöffnet und Hydraulikflüssigkeit von der Bremsdruckerzeugungseinrichtung in den/die Bremskreise der zweiten Gruppe befördert wird.

### ZEICHNUNGEN

Im folgenden wird die Erfindung anhand eines Ausführungsbeispiels in einer Zeichnung gezeigt und anschließend beschrieben.

Dabei zeigt
Figur 1 den schematischen Aufbau einer erfindungsgemäßen Bremseinrichtung einschließlich einer Steuereinrichtung, die auch zusätzliche verzögernde Wirkaggregate mit einbezieht;
Figur 2 eine Vorrichtung zur Entkopplung nicht benötigter Hydraulikpumpen mittels eines mechanischen Freilaufs;
Figur 3 eine Möglichkeit, nicht benötigte Hydraulikpumpen hydraulisch zu entkoppeln.

### BESCHREIBUNG DER AUSFÜHRUNGSBEISPIELE

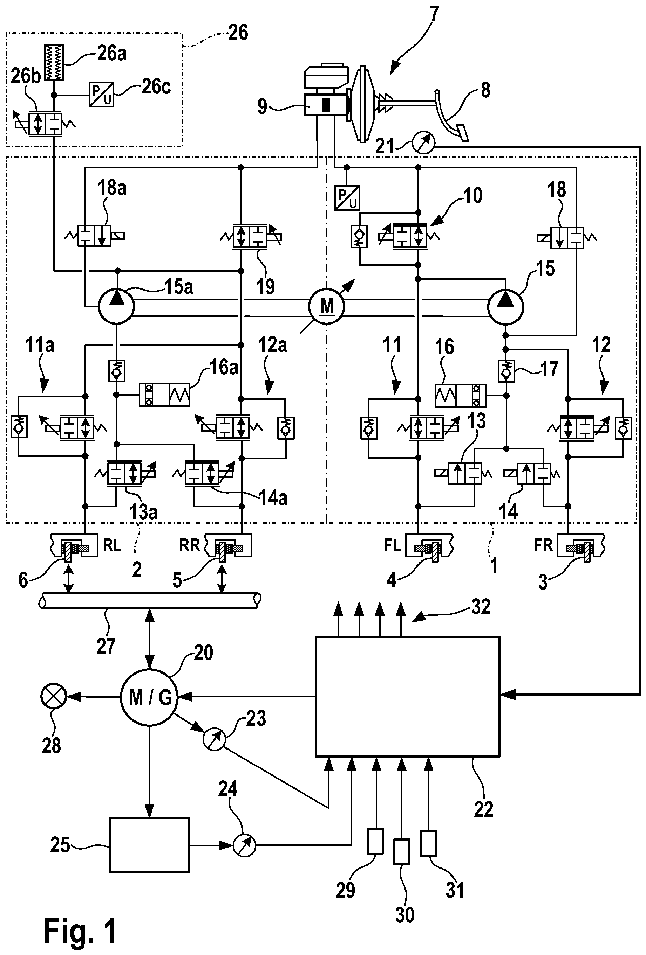

Die Figur 1 zeigt ein zweikreisiges Bremssystem mit einem ersten Bremskreis 1, der in diesem Fall die erste Gruppe von Bremskreisen repräsentiert auf der rechten Seite der Figur und einem zweiten Bremskreis 2, der den einzigen Bremskreis der zweiten Gruppe von Bremskreisen bei dem dargestellten Ausführungsbeispiel bildet. Die strichpunktierten Linien bezeichnen dabei jedoch lediglich funktionale Grenzen und Zuordnungen, die entsprechenden Einheiten können dennoch in gemeinsamen Baueinheiten, z.B. einem Hydraulikblock, zusammengefasst sein.

Im folgenden wird zunächst die Funktion des ersten Bremskreises 1 beschrieben, danach wird auf die Besonderheiten des zweiten Bremskreises 2 eingegangen.

Die Figur 1 zeigt eine Bremseinrichtung mit einem ersten Bremskreis 1 auf der rechten Seite, der den Vorderrädern 3, 4 eines zweiachsigen Kraftfahrzeuges zugeordnet ist sowie einem zweiten Bremskreis 2, der den Hinterrädern 5, 6 des Kraftfahrzeuges zugeordnet ist. Die Bremskreise sind jeweils durch strichpunktierte Linien angedeutet. In dem konkreten Fall, dass das Kraftfahrzeug nur zwei Bremskreise aufweist, bildet der erste Bremskreis 1 die erste Gruppe von Bremskreisen, die unmittelbar hydraulisch betätigbar sind, während der zweite Bremskreis die zweite Gruppe von Bremskreisen bildet, die mit einer hydraulischen Bremsbetätigungseinrichtung 7 nur ausnahmsweise verbunden, bei Teilbremsungen jedoch von dieser hydraulisch abgekoppelt sind.
Alternativ zu der dargestellten Variante kann/können auch der/die Bremskreis/e der zweiten Gruppe der Vorderachse zugeordnet sein und die der ersten Gruppe der Hinterachse.

Die hydraulische Bremsdruckerzeugungseinrichtung 7 weist ein Bremspedal 8 sowie einen Hauptbremszylinder 9 auf, in dem gegebenenfalls unter Verwendung eines Bremskraftverstärkers ein Hydraulikdruck zum Betätigen der Bremseinrichtung beim Treten des Bremspedals 8 aufgebaut wird.

Zunächst soll anhand des ersten Bremskreises 1 die Grundfunktion eines derartigen Moduls beispielhaft erläutert werden.

Wird das Bremspedal 8 betätigt, so steht ein erhöhter Bremsdruck in dem Hauptbremszylinder 9 an. Dieser wird über das sogenannte Umschaltventil 10, dessen weitere Funktion weiter unten noch erläutert wird, zu den Druckaufbauventilen 11, 12 geleitet, die den einzelnen Rädern 3, 4 zugeordnet sind.

Grundsätzlich leiten die Druckaufbauventile 11, 12 den erhöhten Hydraulikdruck an die Bremszylinder der Räder 3, 4 weiter, so dass die entsprechenden Reibungsbremsen beispielsweise in Form von Scheibenbremsen betätigt werden. Die Druckaufbauventile sind steuerbar und dienen bei normalen Teilbremsvorgängen auch dem Entbremsen, indem sie Hydraulikflüssigkeit gesteuert gegebenenfalls in beiden Richtungen passieren lassen. Beim radindividuellen Entbremsen eines einzelnen Rades in dem Fall dass beispielsweise ein Antiblockiersystem anspricht, kommen auch die Druckabsenkventile 13, 14 zum Einsatz, so dass der Hydraulikdruck in den Radbremszylindern unabhängig vom Druckniveau im Hochdruckteil des entsprechenden Bremskreises abgesenkt und die Hydraulikflüssigkeit zur Ansaugseite der Hydraulikpumpe 15 abgeführt werden kann. Dort ist ein Hydraulikspeicher 16 zur Aufnahme der Hydraulikflüssigkeit vorgesehen. Ein federbelastetes Rückschlagventil 17 sorgt dafür, dass die Hydraulikpumpe Hydraulikflüssigkeit gegebenenfalls über das geöffnete Ansaugventil 18 ansaugt und dass von der Ansaugseite der Hydraulikpumpe aus keine Hydraulikflüssigkeit zum Volumenspeicher 16 fließen kann.

Üblicherweise ist ein Antiblockiersystem für die einzelnen Räder vorgesehen, das ein Blockieren der Räder bei zu starkem Bremsen verhindert. Es sind dazu beispielsweise nicht dargestellte Drehzahlfühler an den Rädern 4, 3 vorgesehen, die beim Blockieren eines Rades ein Signal an eine Steuereinrichtung 22 abgeben. Darauf wird das dem Rad zugeordnete Bremsdruckaufbauventil 11, 12 geschlossen und gleichzeitig das zugehörige Bremsdruckabsenkventil 13,14 geöffnet, um die Blockade des Rades aufzuheben. Gleichzeitig wird die Hydraulikpumpe 15 angetrieben, um Hydraulikflüssigkeit unter hohem Druck zur Primärseite des Bremskreises zu pumpen, um für weitere Regelzyklen bereit zu sein.

Dreht sich das entsprechende Rad wieder, so kann mittels Öffnung des Bremsdruckaufbauventils 11, 12 der Druck und damit die Bremswirkung wieder erhöht werden, so lange bis wieder eine Blockade droht. Dieser iterative Prozess benötigt auf der Primärseite des Bremskreises Hydraulikflüssigkeit unter hohem Druck, die von der Bremsbetätigungseinrichtung geliefert wird. Der Hydraulikspeicher 16 sorgt dafür, dass für die Hydraulikflüssigkeit insbesondere beim radindividuellen Entbremsen über die Ventile 13,14 ein Ausgleichsvolumen zur Verfügung steht. Durch die Hydraulikpumpe 15 wird die Hydraulikflüssigkeit zum Hauptbremszylinder zurückgefördert.

Der beschriebene Vorgang kann in ähnlicher Form auch dann durchgeführt werden, wenn beim Anfahren des Fahrzeugs an einem Rad oder an mehreren Rädern Schlupf auftritt oder wenn eine Radbremse zum Zweck einer Fahrdynamikregelung betätigt wird, ohne dass im Hauptbremszylinder Bremsdruck ansteht Dazu wird die Pumpe eingeschaltet und das Umschaltventil 10 geschlossen oder entsprechend dem gewünschten Druck angesteuert.

Gleichzeitig wird das sogenannte Ansaugventil/Füllventil 18 geöffnet, so dass Hydraulikflüssigkeit aus dem Bereich des Reservoirs des Hauptbremszylinders zur Ansaugseite der Hydraulikpumpe 15 gelangen kann. In allen anderen Fällen ist das Ansaugventil 18 vorteilhafterweise geschlossen.

Die Funktion des zweiten Bremskreises 2 auf der linken Seite der Funktion 1 ist in vielerlei Hinsicht ähnlich der des ersten Bremskreises 1, wobei jedoch als Unterschiede beispielsweise zu beachten sind dass der zweite Bremskreis 2 durch das Trennventil 19 von dem zweikammrigen Hauptbremszylinder 9 insbesondere bei Teilbremsungen vollständig abgekoppelt werden kann und dass die Entbremsung beim zweiten Bremskreis 2 im Unterschied zum ersten Bremskreis ausschließlich über Druckabsenkungsventile erfolgen kann. Bei der Beschreibung der Funktionsweise des zweiten Bremskreises sind drei grundsätzliche Zustände zu unterscheiden:
1. Beim verzögerungsfreien Lauf des Kraftfahrzeugs wird weder eine Radbremse 5, 6 betätigt noch notwendigerweise ein Wirkaggregat 20, beispielsweise in Form eines generatorisch betriebenen Antriebselektromotors, genutzt. Ein bedarfsbedingter Betrieb entsprechender Wirkaggregate bleibt davon unbeeinflusst.
2. Im Falle einer Teilbremsung findet vorzugsweise rekuperatives Bremsen statt, das heißt es wirkt ein bekanntes Bremsmoment durch das Wirkaggregat 20 auf die Räder 5, 6. Der Verzögerungswunsch, der vom Fahrer durch Betätigen des Bremspedals 8 geäußert wird, kann mittels eines Sensors 21 aufgenommen und an die Steuereinrichtung 22 weitergegeben werden. Dieser ist das Verzögerungsmoment des Wirkaggregats 20 bekannt oder dies wird mittels eines Leistungssensors 23 gemessen und übermittelt. Alternativ oder zusätzlich kann auch mittels eines Ladungssensors 24 der Ladezustand einer Batterie 25, die gegebenenfalls durch das Wirkaggregat geladen wird, erfasst und an die Steuereinrichtung 22 gegeben werden, um den Lastzustand des Wirkaggregats 20 festzustellen.

Unter Berücksichtigung des Bremswunsches, der tatsächlich durch den ersten Bremskreis 1 auf hydraulischem Wege erzielten Verzögerungswirkung und des bekannten Verzögerungsmoments des Wirkaggregats 20 berechnet die Steuereinrichtung 22 die durch den zweiten Bremskreis zu erzielende Bremsverzögerung und stellt diese primär durch Ansteuerung des Speicherventils 26b, das beispielsweise als Druckdifferenzsteuerungsventil arbeitet, ein. Der Druckspeicher 26a ist üblicherweise mit unter Druck stehender Hydraulikflüssigkeit gefüllt, die durch Öffnung des Speicherventils 26b zu den Bremsdruckaufbauventilen 11a, 12a verschoben wird. Der so eingestellte Hydraulikdruck wird über die Bremsdruckaufbauventile 11a, 12a an die Radbremszylinder der Räder 5, 6 weitergeben. Bei Erreichen der maximal ohne Durchrutschen der Räder möglichen Bremswirkung beziehungsweise zum Entbremsen werden die Bremsdruckabsenksventile 14a, 13a geöffnet und Hydraulikflüssigkeit kann zur Ansaugseite der Hydraulikpumpe 15a beziehungsweise zu dem Speicher 16a zurückfließen.

Durch das Konzept der Druckspeichereinrichtung muss bei Abkopplung von dem Hauptbremszylinder im zweiten Bremskreis der Bremsdruck nicht durch eine Hydraulikpumpe 15a erzeugt werden, sondern steht ausreichend und verzögerungsfrei aus dem Druckspeicher zur Verfügung.

Im ungebremsten Zustand des Systems ist üblicherweise das Trennventil 19 geöffnet und das Ansaugventil/Füllventil 18a geschlossen.

Nach Beenden eines Bremsvorgangs kann andererseits der Druckspeicher 26a, der im wesentlichen aus einem Metall- Faltenbalg, einem Gefäß mit einer elastischen Membran, einem insgesamt elastischen Gefäß oder einer Kolben/Zylinderanordnung bestehen kann, nötigenfalls durch den Betrieb der Hydraulikpumpe 15a, vorteilhaft bei geöffnetem Ansaugventil/Füllventil 18a und geschlossenem Trennventil 19 wieder aufgeladen werden. Es kann in diesem Zustand Hydraulikflüssigkeit von dem Reservoir der Hauptbremszylinderkammern aus angesaugt werden. Zudem wird der Volumenspeicher 16a geleert und die dort gespeicherte Hydraulikflüssigkeit mittels der Pumpe 15a in den Druckspeicher 26a geladen.

Zur Überwachung des Füllzustands des Druckspeichers steht ein Sensor 26c in Form eines Druck- oder Füllwegsensors zur Verfügung.

Bei rekuperativen Bremsvorgängen des zweiten Bremskreises 2 wird die notwendige Bremsintensität der Bremskreise der zweiten Gruppe durch die zusätzliche Verzögerungswirkung des Wirkaggregates 20 über die Antriebswelle 27 auf die Räder 5, 6 grundsätzlich vermindert und es wird entsprechend Energie über das Wirkaggregat zurückgewonnen und beispielsweise in der Batterie 25 gespeichert.

In den Fällen, in denen das Verzögerungsmoment des Wirkaggregats 20 schwankt, also beispielsweise, wenn die Batterie 25 voll ist, das Fahrzeug sich verlangsamt oder der Antriebsstrang durch einen Getriebeschaltvorgang von den Rädern abgekoppelt wird, muss, um die Gesamtverzögerung konstant zu halten, durch die Steuereinrichtung 22 entsprechend entweder, soweit möglich, das Verzögerungsmoment des Wirkaggregats erhöht werden, beispielsweise durch Zuschalten eines elektrischen Verbrauchers 28 und/oder es muss die Ansteuerung des zweiten Bremskreises 2 durch entsprechende Ansteuerung des Speicherventils 26b so angepasst werden, dass die veränderte Bremskraft das geänderte Verzögerungsmoment des Wirkaggregats 20 ausgleicht.

Dies ist bei der erfindungsgemäßen Bremseinrichtung wesentlich einfacher möglich als bei herkömmlichen Bremseinrichtungen, da einerseits durch die direkte Betätigung des ersten Bremskreises die dort erzielte Bremswirkung konstant bleibt und vom Fahrer gut steuerbar ist und andererseits der Ausgleich von Bremswirkungen zwischen den beiden unabhängigen Teilbremseinrichtungen 2, 20 durch die Steuereinrichtung 22 relativ einfach und stetig zu realisieren ist.
3. Es kann vorgesehen sein, dass bei einer Vollbremsung, sofern der Druckspeicher nicht ausreichend gefüllt ist, das Trennventil 19 das bei Teilbremsvorgängen geschlossen bleibt, geöffnet wird, so dass der in dem Hauptbremszylinder 9 erzeugte hohe Bremsdruck durch das Trennventil 19 und die Bremsdruckaufbauventile 11a, 12a unmittelbar zu den Bremszylindern der Räder 5, 6 geleitet werden kann. Auf diese Weise wird eine optimale Sofortbremswirkung mit einem entsprechenden Bremsgefühl am Bremspedal 8 erzeugt. Es findet durch die Ankopplung eines zweiten Bremskreises 2 an die Bremsdruckerzeugungseinrichtung 7 eine minimale Verlängerung des Pedalwegs statt, die jedoch im Falle der Notbremsung tolerabel ist.

Im Bereich der Steuereinrichtung 22 sind in der Figur 1 zudem noch Sensoren 29 (Querbeschleunigungssensor), 30 (Schlupfsensor) und 31 (Drehzahlfühler) dargestellt. Außerdem kann ein Fahrtrichtungssensor vorgesehen sein, der der Steuereinrichtung 22 hilft, zwischen Vorwärtsfahrt und Rückwärtsfahrt zu unterscheiden, so dass bei Rückwärtsfahrt die Bremsen der Hinterachse stärker belastet werden können.

Zudem kann die Steuereinrichtung 22 mit Drehzahlfühlern an den Rädern 5, 6 verbunden sein, sowie mit einem Sensor, der die Betätigung der Getriebekupplung anzeigt.

Die entsprechenden Ausgänge 32 sind mit den steuerbaren Ventilen der Bremseinrichtung, unter anderem den Ventilen 11a, 12a 26b, sowie mit den Ventilen 13a 14a, verbunden.

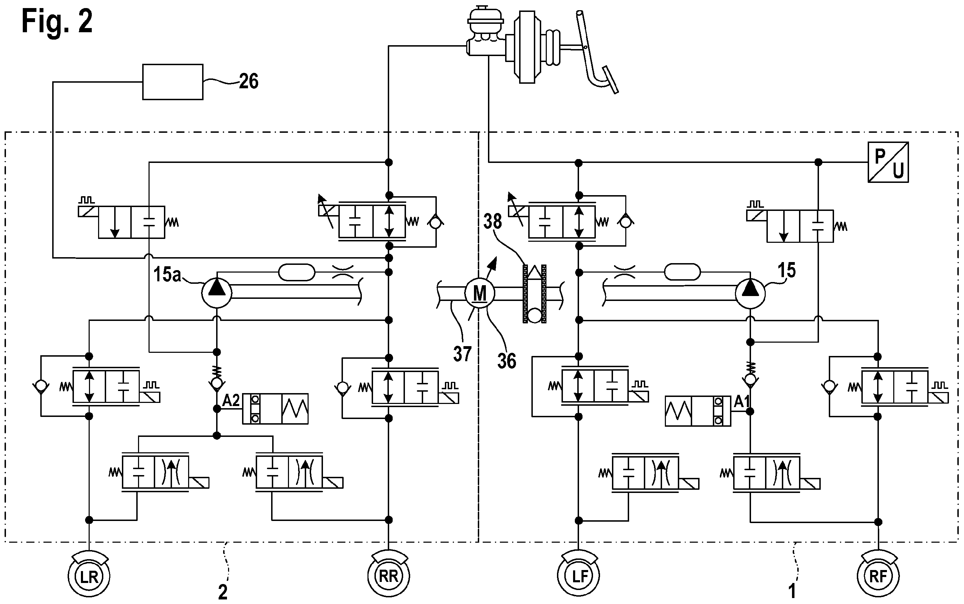

In der Figur 2 ist eine Bremseinrichtung dargestellt, die in großen Teilen der in Figur 1 dargestellten entspricht. Entsprechend sind identische Elemente mit gleichen Bezugszeichen versehen. Es ist in der Figur 2 eine Einrichtung dargestellt, die den Komfort dadurch erhöht, dass eine jeweils in entsprechenden Bremskreisen nicht benötigte Hydraulikpumpe 15 dann, wenn sie nicht benötigt wird, vom Antriebsstrang des Pumpenantriebsmotors 36 abgekoppelt wird. Dies geschieht dadurch, dass der Pumpenantriebsmotor 36 grundsätzlich in beiden Drehrichtungen die entsprechende Antriebswelle 37 treiben kann und dass die Hydraulikpumpe 15a des zweiten Bremskreises unabhängig von der Drehrichtung der Welle 37 einen Hydraulikdruck erzeugen kann. Auf der Welle 37 ist zwischen dem Antriebsmotor 36 und der Hydraulikpumpe 15 des ersten Bremskreises eine mechanische Freilaufeinrichtung 38 gebildet, die dafür sorgt, dass die Hydraulikpumpe 15 des ersten Bremskreises nur in einer Drehrichtung der Welle 37 angetrieben wird, in der entgegengesetzten Laufrichtung jedoch nicht.

Damit wird verhindert, dass, wenn eine Speicherladung während einer Bremspedalbetätigung durchgeführt werden muss, entsprechende Pulsationen durch eine mitangetriebene Pumpe entstehen und gegebenenfalls bei der Betätigung des Bremspedals für den Fahrer spürbar sind.

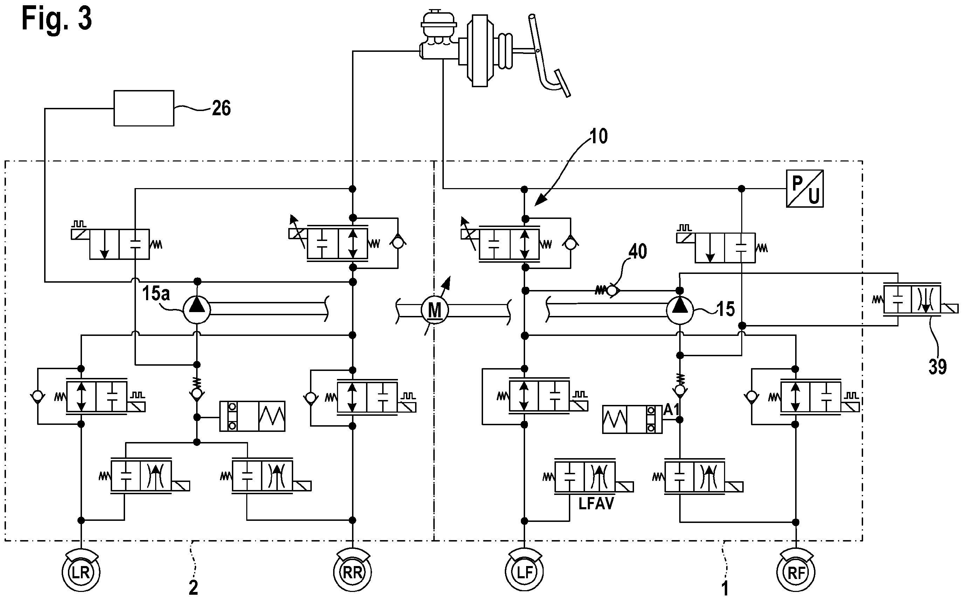

In der Figur 3 ist eine Bremseinrichtung ähnlich der in der Figur 2 dargestellten repräsentiert, wobei die Aufgabe der Entkopplung der Hydraulikdruckerzeugung des ersten Bremskreises 1 von der Hydraulikdruckerzeugung in dem zweiten Bremskreis 2 nicht durch einen mechanischen Freilauf der Antriebswelle der Hydraulikpumpen gelöst ist, sondern dadurch, dass die Hydraulikpumpe 15 des ersten Bremskreises 1 zwar gleichzeitig mit der Hydraulikpumpe 15a des zweiten Bremskreises 2 betrieben, jedoch im Entkopplungsfall die Ausgangsseite der Hydraulikpumpe 15 über ein Schaltventil 39, das in diesem Fall geöffnet wird, mit der Ansaugseite derselben Hydraulikpumpe 15 verbunden wird, so dass die Pumpe Hydraulikflüssigkeit im Kreis fördert. Dadurch ist ein Leerlauf der Hydraulikpumpe 15 gewährleistet, so dass Pulsationen vermieden oder zumindest verringert werden.

Die Hydraulikpumpe 15 ist über ein federbelastetes Rückschlagventil 40 mit der Druckseite des ersten Bremskreises 1 verbunden, um gegebenenfalls das Einbremsen über den Hauptbremszylinder in die Hydraulikpumpe zu vermeiden.

Die erfindungsgemäße Bremseinrichtung erlaubt somit eine Entkopplung von einzelnen Bremskreisen vom Hauptbremszylinder bei gleichzeitiger Versorgung dieser Bremskreise aus einem Druckspeicher sowie die komfortable Nutzung von Rekuperationsbremsvorgängen, wobei Schwankungen innerhalb eines Teilsystems der Bremseinrichtung abgefangen und ausgeglichen werden können und somit für den Fahrer beziehungsweise Insassen des Fahrzeugs unmerklich bleiben. Zudem ist ein weiteres Teilsystem der Bremseinrichtung vorgesehen, das gegebenenfalls von den Ausgleichvorgängen unbeeinflusst bleibt und direkt hydraulisch mittels des Hauptbremszylinders betätigt wird. Eine kompetente Steuereinrichtung steuert in geeigneter Weise alle auftretenden Brems- und Verzögerungswirkungen.

## Patentansprüche

1. Bremseinrichtung für ein Kraftfahrzeug mit wenigstens einem Bremskreis einer ersten Gruppe von Bremskreisen (1) und wenigstens einem Bremskreis einer zweiten Gruppe von Bremskreisen (2), die jeweils als hydraulische Bremskreise ausgebildet sind, wobei wenigstens ein erster Bremskreis (1) der ersten Gruppe unmittelbar, insbesondere mittels eines steuerbaren hydraulischen Ventils (10), mit einer Bremsdruckerzeugungseinrichtung (7) verbunden ist, wobei wenigstens ein zweiter Bremskreis (2) der zweiten Gruppe mittels eines hydraulischen Trennventils (19) von der Bremsdruckerzeugungseinrichtung (7) hydraulisch entkoppelbar ist und ein Druckspeicher (26a) vorgesehen ist, der mit der Druckseite des zweiten Bremskreises (2) und gegebenenfalls weiterer Bremskreise ausschließlich der zweiten Gruppe mittels eines steuerbaren Speicherventils (26b) verbunden ist, und wobei der zweite Bremskreis (2) durch das hydraulische Trennventil (19) vollständig von der Bremsdruckerzeugungseinrichtung (7) abgekoppelt werden kann
**dadurch gekennzeichnet, dass**
die durch die Bremskreise der zweiten Gruppe gebremsten Räder (5,6) mit einem Wirkaggregat (20) verbunden sind, das eine Verzögerungswirkung ausübt.

2. Bremseinrichtung nach Anspruch 1,
**dadurch gekennzeichnet,**
**dass** der Druckspeicher (26a) mit einem Sensor (26c) zur Ermittlung des Füllgrades versehen ist.

3. Bremseinrichtung nach Anspruch 2,
**dadurch gekennzeichnet,**
**dass** der Sensor (26c) ein Wegsensor für den Kompressionsweg eines insbesondere als Faltenbalg oder als Kolben/Zylindersystem ausgebildeten Druckspeichers (26a) ist.

4. Bremseinrichtung nach Anspruch 2,
**dadurch gekennzeichnet,**
**dass** der Sensor (26c) ein Drucksensor ist.

5. Bremseinrichtung nach Anspruch 1 oder einem der folgenden,
**dadurch gekennzeichnet,**
**dass** der Druckspeicher (26a) mit je einem Bremsdruckaufbauventil (11a, 12a) jeder der Radbremsen einer Fahrzeugachse (27) verbunden ist, wobei jede der Radbremsen mit je einem Entbremsungsventil (13a,14a) verbunden ist, das seinerseits mit einer Niederdruckseite, insbesondere einem Niederdruckspeicher (16a) verbunden ist, wobei die Entbremsungsventile (13a, 14a) regelbare Differenzdruckventile sind.

6. Bremseinrichtung nach Anspruch 1 oder einem der folgenden,
**dadurch gekennzeichnet,**
**dass** ein Drucksensor in wenigstens einem Bremskreis der zweiten Gruppe (2) vorgesehen und mit einer Steuereinrichtung (22) für das Speicherventil (26b) verbunden ist.

7. Bremseinrichtung nach Anspruch 1 oder einem der folgenden,
**dadurch gekennzeichnet,**
**dass** ein Reservoir der Bremsdruckerzeugungseinrichtung (7) mittels eines schaltbaren Füllventils (18a) mit der Ansaugseite einer Hydraulikpumpe (15a) des wenigstens einen Bremskreises der zweiten Gruppe (2) verbunden ist.

8. Bremseinrichtung nach Anspruch 1 oder einem der folgenden,
**dadurch gekennzeichnet,**
**dass** das Wirkaggregat (20) ein Generator, insbesondere ein generatorisch betriebener Antriebselektromotor des Kraftfahrzeugs ist.

9. Bremseinrichtung nach Anspruch 1 oder einem der folgenden, bei der die Bremskreise (1,2) beider Gruppen als hydraulische Bremskreise ausgebildet sind und je eine Hydraulikpumpe (15,15a) aufweisen, wobei die Hydraulikpumpen (15, 15a) mit einem gemeinsamen Pumpenantrieb (M) kinematisch verbunden sind,
**dadurch gekennzeichnet,**
**dass** die den Bremskreisen (1) der ersten Gruppe zugeordneten Hydraulikpumpen (15) mechanisch von dem Pumpenantrieb (M) abkoppelbar sind, insbesondere durch eine durch die Drehrichtung der Pumpenantriebswelle steuerbare Freilaufkupplung (38).

10. Bremseinrichtung nach Anspruch 1 oder einem der folgenden, bei der die Bremskreise (1,2) beider Gruppen als hydraulische Bremskreise ausgebildet sind und je eine Hydraulikpumpe (15,15a) aufweisen, wobei die Hydraulikpumpen (15, 15a) mit einem gemeinsamen Pumpenantrieb (M) kinematisch verbunden sind,
**dadurch gekennzeichnet,**
**dass** die den Bremskreisen (1) der ersten Gruppe zugeordneten Hydraulikpumpen (15) über Ventile (39) ansaugseitig mit dem jeweiligen Druckausgang verbindbar sind.

11. Verfahren zum Betrieben einer Bremseinrichtung für ein Kraftfahrzeug mit wenigstens einem Bremskreis einer ersten Gruppe von Bremskreisen (1) und wenigstens einem Bremskreis einer zweiten Gruppe von Bremskreisen (2), die jeweils als hydraulische Bremskreise ausgebildet sind, wobei wenigstens ein erster Bremskreis (1) der ersten Gruppe unmittelbar, insbesondere mittels eines steuerbaren hydraulischen Ventils (10), mit einer Bremsdruckerzeugungseinrichtung (7) verbunden ist, wobei wenigstens ein zweiter Bremskreis (2) der zweiten Gruppe mittels eines hydraulischen Trennventils (19) von der Bremsdruckerzeugungseinrichtung (/) hydraulisch entkoppelbar ist und ein Druckspeicher (26a) vorgesehen ist, der mit der Druckseite des zweiten Bremskreises (2) und gegebenenfalls weiterer Bremskreise ausschließlich der zweiten Gruppe mittels eines steuerbaren Speicherventils (26b) verbunden ist, und wobei der zweite Bremskreis (2) durch das hydraulische Trennventil (19) vollständig von der Bremsdruckerzeugungseinrichtung (7) abgekoppelt wird,
**dadurch gekennzeichnet, dass**
die durch den wenigstens einen Bremskreis der zweiten Gruppe gebremsten Räder (5,6) mit einem Wirkaggregat (20) verbunden sind, das eine Verzögerungswirkung ausübt, wobei unter Berücksichtigung:
- eines Bremswunsches,
- einer durch den wenigstens einen Bremskreis der ersten Gruppe erzielten Verzögerungswirkung, und
- des bekannten Verzögerungsmoments des Wirkaggregats (20),
mittels einer Steuereinrichtung (22) die durch den wenigstens einen zweiten Bremskreis (2) zu erzielende Bremsverzögerung ermittelt wird und diese mittels des Speicherventils (26b) eingestellt wird.

12. Verfahren nach Anspruch 11, wobei die Bremseinrichtung ein schaltbares Füllventil (18a) aufweist, das mit der Ansaugseite einer Hydraulikpumpe des wenigstens einen Bremskreises der zweiten Gruppe verbunden ist, wobei der Druckspeicher (26a) mit je einem Bremsdruckaufbauventil (11a, 12a) jeder der Radbremsen des wenigstens einen Bremskreises der zweiten Gruppe verbunden ist,
**dadurch gekennzeichnet,**
**dass** das Füllventil (18a) geöffnet, das Speicherventil (26b) geöffnet und die Bremsdruckaufbauventile (11a,12a) geschlossen und die Hydraulikpumpe (15a) des zweiten Bremskreises (2) zur Füllung des Druckspeichers (26a) betrieben wird.

13. Verfahren nach Anspruch 11,
**dadurch gekennzeichnet,**
**dass** im Falle einer Teilbremsung das Speicherventil (26b) wenigstens teilweise geöffnet und damit der Druck in dem wenigstens einen Bremskreis (2) der zweiten Gruppe gesteuert oder geregelt wird.

14. Verfahren nach Anspruch 11,
**dadurch gekennzeichnet,**
**dass** der Druckspeicher überwacht, im Falle einer Vollbremsung bei nicht ausreichend gefülltem Druckspeicher das Trennventil geöffnet, und Hydraulikflüssigkeit von der Bremsdruckerzeugungseinrichtung (7) in den wenigstens einen Bremskreis (2) der zweiten Gruppe befördert wird.

## Claims

1. Brake device for a motor vehicle comprising at least one brake circuit of a first group of brake circuits (1) and at least one brake circuit of a second group of brake circuits (2), which brake circuits are each in the form of hydraulic brake circuits, wherein at least one first brake circuit (1) of the first group is directly connected to a brake pressure generating device (7), in particular by means of a controllable hydraulic valve (10), wherein at least one second brake circuit (2) of the second group can be hydraulically decoupled from the brake pressure generating device (7) by means of a hydraulic separating valve (19), and a pressure accumulator (26a) is provided, which pressure accumulator is connected to the delivery side of the second brake circuit (2) and possibly further brake circuits exclusively of the second group by means of a controllable accumulator valve (26b), and wherein the second brake circuit (2) can be completely uncoupled from the brake pressure generating device (7) by the hydraulic separating valve (19),
**characterized in that**
the wheels (5, 6) which are braked by the brake circuits of the second group are connected to an operative assembly (20) which exerts a deceleration effect.

2. Brake device according to Claim 1,
**characterized**
**in that** the pressure accumulator (26a) is provided with a sensor (26c) for ascertaining the filling level.

3. Brake device according to Claim 2,
**characterized**
**in that** the sensor (26c) is a travel sensor for the compression travel of a pressure accumulator (26a) which is, in particular, in the form of a folding bellows or in the form of a piston/cylinder system.

4. Brake device according to Claim 2,
**characterized**
**in that** the sensor (26c) is a pressure sensor.

5. Brake device according to Claim 1 or one of the following claims,
**characterized**
**in that** the pressure accumulator (26a) is connected to in each case one brake pressure build-up valve (11a, 12a) of each of the wheel brakes of a vehicle axle (27), wherein each of the wheel brakes is connected to in each case one brake-release valve (13a, 14a) which, for its part, is connected to a low-pressure side, in particular to a low-pressure accumulator (16a), wherein the brake-release valves (13a, 14a) are regulable differential pressure valves.

6. Brake device according to Claim 1 or one of the following claims,
**characterized**
**in that** a pressure sensor is provided in at least one brake circuit of the second group (2) and is connected to a control device (22) for the accumulator valve (26b).

7. Brake device according to Claim 1 or one of the following claims,
**characterized**
**in that** a reservoir of the brake pressure generating device (7) is connected to the intake side of a hydraulic pump (15a) of the at least one brake circuit of the second group (2) by means of a switchable filling valve (18a).

8. Brake device according to Claim 1 or one of the following claims,
**characterized**
**in that** the operative assembly (20) is a generator, in particular an electric drive motor of the motor vehicle, which electric drive motor is operated as a generator.

9. Brake device according to Claim 1 or one of the following claims, in which the brake circuits (1, 2) of both groups are in the form of hydraulic brake circuits and in each case have a hydraulic pump (15, 15a), wherein the hydraulic pumps (15, 15a) are kinematically connected to a common pump drive (M),
**characterized**
**in that** the hydraulic pumps (15) which are associated with the brake circuits (1) of the first group can be mechanically uncoupled from the pump drive (M), in particular by a freewheeling clutch (38) which can be controlled by the rotation direction of the pump drive shaft.

10. Brake device according to Claim 1 or one of the following claims, in which the brake circuits (1, 2) of both groups are in the form of hydraulic brake circuits and in each case have a hydraulic pump (15, 15a), wherein the hydraulic pumps (15, 15a) are kinematically connected to a common pump drive (M),
**characterized**
**in that** the hydraulic pumps (15) which are associated with the brake circuits (1) of the first group can be connected on the intake side to the respective pressure output by means of valves (39).

11. Method for operating a brake device for a motor vehicle comprising at least one brake circuit of a first group of brake circuits (1) and at least one brake circuit of a second group of brake circuits (2), which brake circuits are each in the form of hydraulic brake circuits, wherein at least one first brake circuit (1) of the first group is directly connected to a brake pressure generating device (7), in particular by means of a controllable hydraulic valve (10), wherein at least one second brake circuit (2) of the second group can be hydraulically decoupled from the brake pressure generating device (/) by means of a hydraulic separating valve (19), and a pressure accumulator (26a) is provided, which pressure accumulator is connected to the delivery side of the second brake circuit (2) and possibly further brake circuits exclusively of the second group by means of a controllable accumulator valve (26b), and wherein the second brake circuit (2) can be completely uncoupled from the brake pressure generating device (7) by the hydraulic separating valve (19),
**characterized in that**
the wheels (5, 6) which are braked by the at least one brake circuit of the second group are connected to an operative assembly (20) which exerts a deceleration effect, wherein the braking deceleration which is to be achieved by the at least one second brake circuit (2) is ascertained by means of a control device (22) taking into account:
- a braking request,
- a deceleration effect which is achieved by the at least one brake circuit of the first group, and
- the known deceleration moment of the operative assembly (20),
and the said braking deceleration is set by means of the accumulator valve (26b).

12. Method according to Claim 11, wherein the brake device has a switchable filling valve (18a) which is connected to the intake side of a hydraulic pump of the at least one brake circuit of the second group, wherein the pressure accumulator (26a) is connected to in each case one brake pressure build-up valve (11a, 12a) of each of the wheel brakes of the at least one brake circuit of the second group,
**characterized**
**in that** the filling valve (18a) is opened, the accumulator valve (26b) is opened and the brake pressure build-up valves (11a, 12a) are closed and the hydraulic pump (15a) of the second brake circuit (2) is operated for the purpose of filling the pressure accumulator (26a) .

13. Method according to Claim 11,
**characterized**
**in that**, in the event of partial braking, the accumulator valve (26b) is at least partially opened and therefore the pressure in the at least one brake circuit (2) of the second group is controlled or regulated.

14. Method according to Claim 11,
**characterized**
**in that** the pressure accumulator is monitored, the separating valve is opened in the event of full braking with an insufficiently filled pressure accumulator, and hydraulic fluid is conveyed from the brake pressure generating device (7) to the at least one brake circuit (2) of the second group.

## Revendications

1. Dispositif de freinage pour véhicule automobile, présentant au moins un circuit de freinage d'un premier groupe de circuits de freinage (1) et au moins un circuit de freinage d'un deuxième groupe de circuits de freinage (2), tous configurés comme circuits hydrauliques de freinage,
au moins un premier circuit de freinage (1) du premier groupe étant relié de manière directe à un dispositif (7) d'établissement de pression de freinage, en particulier au moyen d'une soupape hydraulique asservie (10),
au moins un deuxième circuit de freinage (2) du deuxième groupe pouvant être débranché hydrauliquement au moyen d'une soupape hydraulique de séparation (19) du dispositif (7) d'établissement de pression de freinage,
une réserve sous pression (26a) reliée au côté sous pression du deuxième circuit de freinage (2) et éventuellement d'autres circuits de freinage exclusivement du deuxième groupe au moyen d'une soupape de réserve (26b) asservie étant prévue,
le deuxième circuit de freinage (2) pouvant être débranché complètement du dispositif (7) d'établissement de pression de freinage par la soupape hydraulique de séparation (19),
**caractérisé en ce que**
les roues (5, 6) freinées par le circuit de freinage du deuxième groupe sont reliées à un ensemble fonctionnel (20) qui exerce un effet de ralentissement.

2. Dispositif de freinage selon la revendication 1, **caractérisé en ce que** la réserve sous pression (26a) est dotée d'un capteur (26c) qui détermine son niveau de remplissage.

3. Dispositif de freinage selon la revendication 2, **caractérisé en ce que** le capteur (26c) est un capteur de déplacement du parcours de compression d'une réserve de pression (26a) configurée en particulier comme soufflet en accordéon ou comme système à piston et cylindre.

4. Dispositif de freinage selon la revendication 2, **caractérisé en ce que** le capteur (26c) est un capteur de pression.

5. Dispositif de freinage selon la revendication 1 ou l'une des suivantes, **caractérisé en ce que** la réserve sous pression (26a) est raccordée à une soupape (11a, 12a) d'établissement de pression de freinage de chacun des freins de roues d'un essieu (27) du véhicule, chacun des freins de roues étant raccordé à une soupape (13a, 14a) de délestage de freinage qui est elle-même raccordée à un côté basse pression et en particulier à une réserve (16a) à basse pression, les soupapes (13a, 14a) de délestage de freinage étant des soupapes régulables à pression différentielle.

6. Dispositif de freinage selon la revendication 1 ou l'une des suivantes, **caractérisé en ce qu'**un capteur de pression est prévu dans au moins un circuit de freinage du deuxième groupe (2) et est raccordé à un dispositif de commande (22) de la soupape de réserve (26b).

7. Dispositif de freinage selon la revendication 1 ou l'une des suivantes, **caractérisé en ce qu'**un réservoir du dispositif (7) d'établissement de pression de freinage est relié au moyen d'une soupape de remplissage (18a) commutable au côté d'aspiration d'une pompe hydraulique (15a) du ou des circuits de freinage (2) du deuxième groupe.

8. Dispositif de freinage selon la revendication 1 ou l'une des suivantes, **caractérisé en ce que** l'ensemble fonctionnel (20) est une génératrice, en particulier un moteur électrique, utilisé en génératrice, de l'entraînement du véhicule automobile.

9. Dispositif de freinage selon la revendication 1 ou l'une des suivantes, caractérisé dans lequel les circuits de freinage (1, 2) des deux groupes sont configurés comme circuits hydrauliques de freinage et présentent chacun une pompe hydraulique (15, 15a), les pompes hydrauliques (15, 15a) étant reliées cinématiquement à un entraînement commun (M) de pompe, **caractérisé en ce que** les pompes hydrauliques (15) associées aux circuits de freinage (1) du premier groupe peuvent être débranchées mécaniquement de l'entraînement (M) de pompe, en particulier par un accouplement (38) à roue libre apte à être commandé par le sens de rotation de l'arbre d'entraînement de pompe.

10. Dispositif de freinage selon la revendication 1 ou l'une des suivantes, caractérisé dans lequel les circuits de freinage (1, 2) des deux groupes sont configurés comme circuits hydrauliques de freinage et présentent chacun une pompe hydraulique (15, 15a), les pompes hydrauliques (15, 15a) étant reliées cinématiquement à un entraînement commun (M) de pompe, **caractérisé en ce que** les pompes hydrauliques (15) associées aux circuits de freinage (1) du premier groupe peuvent être reliées par leur côté d'aspiration à la sortie de pression concernée par l'intermédiaire de soupapes (39).

11. Procédé de conduite d'un dispositif de freinage présentant au moins un circuit de freinage d'un premier groupe de circuits de freinage (1) et au moins un circuit de freinage d'un deuxième groupe de circuits de freinage (2), tous configurés comme circuits hydrauliques de freinage,
au moins un premier circuit de freinage (1) du premier groupe étant relié de manière directe à un dispositif (7) d'établissement de pression de freinage, en particulier au moyen d'une soupape hydraulique asservie (10),
au moins un deuxième circuit de freinage (2) du deuxième groupe pouvant être débranché hydrauliquement au moyen d'une soupape hydraulique de séparation (19) du dispositif (/) d'établissement de pression de freinage,
une réserve sous pression (26a) reliée au côté sous pression du deuxième circuit de freinage (2) et éventuellement d'autres circuits de freinage exclusivement du deuxième groupe au moyen d'une soupape de réserve (26b) asservie étant prévue,
le deuxième circuit de freinage (2) étant débranché complètement du dispositif (7) d'établissement de pression de freinage par la soupape hydraulique de séparation (19),
**caractérisé en ce que**
les roues (5, 6) freinées par le circuit de freinage du deuxième groupe sont reliées à un ensemble fonctionnel (20) qui exerce un effet de ralentissement,
le ralentissement de freinage qu'il faut obtenir par le ou les douilles de freinage (2) étant déterminé au moyen d'un dispositif de commande (22) en tenant compte :
- du souhait de freinage,
- de l'effet de ralentissement obtenu à l'aide du ou des circuits de freinage du premier groupe,
- et du couple de ralentissement connu de l'ensemble fonctionnel (20)
et étant établi au moyen de la soupape de réserve (26b).

12. Procédé selon la revendication 11, dans lequel le dispositif de freinage présente une soupape de remplissage asservie (18a) reliée au côté d'aspiration d'une pompe hydraulique du ou des circuits de freinage du deuxième groupe, la réserve sous pression (26a) étant reliée par une soupape (11a, 12a) d'établissement de pression de freinage à chacun des freins de roues du ou des circuits de freinage du deuxième groupe, **caractérisé en ce que** la soupape de remplissage (18a) est ouverte, la soupape de réserve (26b) est ouverte et les soupapes (11a, 12a) d'établissement de pression de freinage sont fermées, la pompe hydraulique (15a) du deuxième circuit de freinage (2) étant utilisée pour remplir la réserve sous pression (26a).

13. Procédé selon la revendication 11, **caractérisé en ce qu'**en cas de freinage partiel, la soupape de réserve (26b) est ouverte au moins en partie et la pression qui règne dans le ou les circuits de freinage (2) du deuxième groupe est commandée ou régulée ainsi.

14. Procédé selon la revendication 11, **caractérisé en ce que** la réserve sous pression est surveillée, et au cas d'un freinage plein lorsque la réserve sous pression n'est pas suffisamment remplie, la soupape de séparation est ouverte et du liquide hydraulique est refoulé par le dispositif (7) d'établissement de pression de freinage dans le ou les circuits de freinage (2) du deuxième groupe.
